# EUROPÄISCHE PATENTSCHRIFT

(11) **EP 4 214 167 B1**
(45) Veröffentlichungstag und Bekanntmachung des Hinweises auf die Patenterteilung: **26.02.2025**
(21) Anmeldenummer: 21772810.4
(22) Anmeldetag: 15.09.2021
(51) Int. Cl.: C03B 7/06

(54) **VERFAHREN ZUM BEHEIZEN EINER GLASSCHMELZE**
METHOD FOR HEATING MOLTEN GLASS
PROCÉDÉ DE CHAUFFAGE DE VERRE FONDU

(30) Priorität: 15.09.2020 DE 102020005638
(43) Veröffentlichungstag der Anmeldung: 26.07.2023
(73) Patentinhaber: Messer Austria GmbH, 2352 Gumpoldskirchen (AT)
(72) Erfinder: DEMUTH, Martin, 2353 Guntramsdorf (AT)
(74) Vertreter: Münzel, Joachim R.
(86) Internationale Anmeldenummer: PCT/EP2021/075358
(87) Internationale Veröffentlichungsnummer: WO 2022/058367

(56) Entgegenhaltungen:
- EP-A1- 3 517 509
- DE-A1- 19 619 919
- US-A- 5 346 524
- US-A1- 2015 128 647

## Beschreibung

Die Erfindung betrifft ein Verfahren zum Beheizen einer fließenden Glasschmelze in einem von Seitenwänden und einer Decke eingefassten Speiserkanal, in den oberhalb der Glasschmelze eine Mehrzahl von in Fließrichtung der Glasschmelze beabstandet voneinander angeordneten Brennstofflanzen und Oxidationsmittellanzen einmünden, durch die Brennstoff bzw. Oxidationsmittel zugeführt und im Speiserkanal miteinander zur Reaktion gebracht werden.

Speiser (bzw. englisch Feeder) werden in bei der Glasproduktion insbesondere dafür eingesetzt, in einem Schmelzofen aufgeschmolzenes Gas im flüssigen Zustand zur Weiterverarbeitung zu transportieren. Das durch den Speiserkanal geführte flüssige Glas (Glasschmelze) wird beispielsweise am Ende des Feeders im Feederkopf mittels gekühlter Messer zu Tropfen geformt, die in weiteren Verarbeitungsschritten zum fertigen Glaserzeugnis verarbeitet oder in einer sonstigen Weise einer Weiterverarbeitung zugeführt werden.

Um eine hohe Qualität des erzeugten Glases zu gewährleisten, müssen die Temperaturbedingungen im Feeder sehr genau eingehalten werden. Der Speiserkanal ist daher üblicherweise in mehrere, in Fließrichtung der Glasschmelze aufeinanderfolgende Zonen eingeteilt, die jeweils einen Temperaturregelkreis besitzen. Die Beheizung der Glasschmelze im Speiserkanal erfolgt dabei üblicherweise entweder elektrisch durch Heizwiderstände oder chemisch, mittels Brennern oder Lanzen, über die ein Brennstoff und ein Oxidationsmittel in den Speiserkanal eingeleitet und dort zur Reaktion gebracht werden.

Als "Brenner" soll im Kontext der vorliegenden Erfindung eine Einrichtung verstanden werden, an denen Brennstoff und Oxidationsmittel gemeinsam - entweder über getrennte Zuführungen innerhalb eines Brennerkopfes oder als Gemisch über eine gemeinsame, mit Zuleitungen für Brennstoff und für Oxidationsmittel strömungsverbundene Zuführung - in einen Behandlungsraum, insbesondere einen Speiserkanal, eingetragen werden. Als "Lanze" soll demgegenüber eine Einrichtung mit einer meist rohrförmigen Zuleitung bezeichnet werden, mittels der nur ein Medium - im Kontext der vorliegenden Erfindung Brennstoff oder Oxidationsmittel - in einen Behandlungsraum (Speiserkanal) eingetragen wird.

Zum Beheizen eines Speisers kommen derzeit meist Brenner zum Einsatz, die, in Fließrichtung des Glases gesehen, beabstandet voneinander in den Seitenwänden oder der Decke des Speiserkanals angeordnet sind. Bei den Brennern handelt es sich in der Regel um Brennstoff-Luft-Brenner oder um Brennstoff-Sauerstoff-Brenner (Oxyfuel-Brenner). Die Brenner weisen dazu entweder parallel zueinander verlaufende Zuführungen für Brennstoff und Oxidationsmittel auf, die gemeinsam an einer Brennerstirn in den Speiserkanal ausmünden, oder Brennstoff und Oxidationsmittel werden innerhalb des Brenners oder bereits vor Erreichen des Brenners miteinander vermischt, und das entstehende Gemisch wird über eine gemeinsame Zuführung in den Speiserkanal eingetragen. In allen Fällen bildet sich im Einsatz unmittelbar vor der Mündungsöffnung des Brenners eine Flamme aus, durch deren Wärmestrahlung die Oberfläche der Glasschmelze beheizt wird. Meist sind die Brenner derart in den Seitenwänden des Speiserkanals angeordnet, dass die von ihnen ausgehenden Flammen im Wesentlichen parallel zur Oberfläche der Glasschmelze und senkrecht zu deren Fließrichtung gerichtet sind. Anordnungen dieser Art sind beispielsweise in der US 3 523 781 A1, der US 5 417 732 B1, der US 5 814 121 B1 oder der WO 2015 048 405 A1 beschrieben.

Damit das im Schmelzofen aufgeschmolzene Glas gut durch den Feeder fließen kann, sind hohe Temperaturen von etwa 1100°C bis 1400°C erforderlich. Dabei spielt eine möglichst homogene Temperaturverteilung innerhalb des Speiserkanals eine große Rolle für die Qualität des erzeugten Glases. Um lokale Überhitzungen zu vermeiden, benötigen Feeder, die mit einer Brennstoff-Luft-Brennertechnologie arbeiten, eine vergleichsweise große Zahl von in Längserstreckung des Speiserkanals angeordneten Brennern, die jedoch einen erheblichen Kostenfaktor darstellen.

Durch ihre verbesserte Wärmeübertragung, basierend insbesondere auf einer intensiveren Wärmestrahlung aufgrund eines geringeren Anteils an Ballaststoffen, wie Stickstoff, in der Ofenatmosphäre, ermöglichen Brennstoff-Sauerstoff-Brenner eine gegenüber Brennstoff-Luft Brennern gleichmäßigere Erwärmung des Gutes im Speiser und somit eine verbesserte Temperaturhomogenität in der Glasschmelze. Durch den Wegfall des Stickstoffballastes im Abgas wird der Brennstoffverbrauch deutlich reduziert, üblicherweise mehr als halbiert. Zugleich kann die Zahl an Brennern pro Streckeneinheit am Speiserkanal reduziert werden. Allerdings kann die Anzahl der Brenner pro Streckeneinheit nicht beliebig verringert werden, da es ansonsten zu Inhomogenitäten in der Temperaturverteilung kommt. Demzufolge ist der Einsatz einer größeren Anzahl vergleichsweise klein bauender Oxyfuel-Brenner notwendig, die teuer in der Anschaffung sind und zudem zur Ausbildung unerwünschter turbulenter Strömungen in der Flamme neigen. Auch können beim Einsatz von Brennstoff-Sauerstoffbrennern, insbesondere bei schmalen Speiserkanälen und/oder im Bereich des Brennermundes, lokale Überhitzungen nicht ausgeschlossen werden.

Die WO 9406723 A1 offenbart demgegenüber einen Speiserkanal, bei dem zur Zuführung von Brennstoff und Oxidationsmittel jeweils Lanzen zum Einsatz kommen, die in den Seitenwänden des Speiserkanals - in Fließrichtung der Glasschmelze gesehen - alternierend angeordnet sind. Die Lanzen sind in den beiden Seitenwänden versetzt zueinander angeordnet, sodass jeweils eine Brennstofflanze einer Oxidationsmittellanze gegenübersteht. In Längsrichtung sind die Lanzen so weit voneinander beabstandet, dass sich die Medienströme im Nahbereich der Seitenwände nicht vermischen, und somit dort keine Verbrennung erfolgt; vielmehr treffen die aus den Lanzen austretenden Medienströme in der Mitte des Speiserkanals aufeinander und bilden dort eine turbulente Flammenwolke aus, die die Glasschmelze im Speiserkanal gleichmäßig erwärmen soll.

Eine ähnliche Anordnung mit einer alternierenden Folge von Brennstoff- und Oxidationsmittellanzen in einem Speiserkanal zeigt die EP 3 517 509 A1.Die aus den Lanzen austretenden Reaktanten vermischen sich im Speiserkanal zu einer Wolke eines zündfähigen Gasgemisches, das nach Zündung eine gleichmäßige Erwärmung bewirkt.

Gegenüber dem Einbau von Brennern sind diese beiden Gegenstände weitaus kostengünsiger, nachteilig ist allerdings, dass die konzentrierte Verbrennung im Zentrum des Speiserkanals die Dichte der Ofenatmosphäre lokal reduziert. Der damit einhergehende Auftrieb ("thermic lift") treibt die heißen Abgase, aber auch die Flammenwolke selbst, in Richtung der Decke des Speiserkanals, wodurch die Wärmeeinwirkung auf die Glasschmelze vermindert wird und Wärmeverluste entstehen, während zugleich das Deckenmaterial erheblich thermisch belastet wird.

Der Erfindung liegt somit die Aufgabe zu Grunde, ein Verfahren zur Beheizung geschmolzenen Glases in einem Speiserkanal anzugeben, das die Nachteile des Standes der Technik vermeidet.

Gelöst ist diese Aufgabe bei einem Verfahren der eingangs genannten Art und Zweckbestimmung dadurch, dass zum Verbrennen des Brennstoffs mit dem Oxidationsmittel an jeder Brennstofflanze ein im Wesentlichen laminar in den Speiserkanal eintretender Brennstoffstoffstrahl erzeugt und mit im Speiserkanal anwesendem Oxidationsmittel unter Ausbildung von Flammen zur Reaktion gebracht wird.

Erfindungsgemäß wird also der Brennstoff aus den Brennstofflanzen mit einer möglichst laminaren Strömung in den Speiserkanal eingetragen, wo er einen zumindest weitgehend laminaren Brennstoffstrahl ausbildet, der eine frühzeitige turbulente Durchmischung von Brennstoff und Oxidationsmittel verhindert. Bei der Verbrennung ergeben sich so schlanke, gerade Flammen von hoher Stabilität, die jeweils beabstandet von der Mündung einer Brennstofflanze beginnen und tief in den Speiserkanal hineinragen, wobei sie bevorzugt sich nicht gegenseitig oder die gegenüberliegende Wand des Speiserkanals berühren. Auf diese Weise wird zum einen das Material der Wände und der Decke des Speiserkanals geschont und zum anderen die Ausbildung einer turbulenten Flammenwolke im Speiserkanal und die damit verbundenen Nachteile vermieden. Die vor den Brennstofflanzen sich ausbildenden Einzelflammen führen zu einer effizienten und gleichmäßigen Beheizung des Glasflusses im Speiser bei gleichzeitig niedrigen NOₓ-Emissionen.

Ähnlich dem Gegenstand der WO 9406723 A1 kommen auch bei der vorliegenden Erfindung Lanzen für Brennstoff und Oxidationsmittel zum Einsatz, die in den Seitenwänden des Speiserkanals - in Fließrichtung des Glases gesehen - beabstandet voneinander angeordnet sind. Dabei kommt es erfindungsgemäß jedoch nicht zur Ausbildung einer Flammenwolke. Ähnlich den Gegenständen, bei denen zum Beheizen des Speiserkanals Brenner zum Einsatz kommen, erfolgt dessen Beheizung mittels einzelner, voneinander beabstandeter Flammen. Der Aufbau der Flammen unterscheidet sich jedoch grundlegend von denen, die von Brennern gebildet werden, da der zur Verbrennung erforderliche Sauerstoff nicht gleichzeitig mit dem Brennstoff in den Flammenkern eingetragen wird, sondern aus von den Brennstofflanzen beabstandeten Oxidationsmittellanzen stammt und somit aus dem Umgebungsbereich des aus den Brennstofflanzen austretenden Brennstoffstrahls in diesen eindiffundiert. Die Verbrennung erfolgt daher nur in einem vergleichsweise dünnen Scherbereich am Flammenrand. Das Flammenvolumen ist somit insgesamt unterstöchiometrisch und besteht in seinem Innern überwiegend - mit einem über die Länge der Flamme freilich abnehmenden Anteil - aus Brennstoff. Erst im Bereich der Flammenspitze sind Brennstoff und Oxidationsmittel so intensiv vermischt, dass eine vollständige Verbrennung des verbliebenen Brennstoffs erfolgt.

Die Gestalt der Flammen wird insbesondere von der Querschnittsfläche der Mündungsöffnungen der Brennstofflanzen und der Strömungsgeschwindigkeit des Brennstoffstroms beeinflusst. Dabei sollte eine vergleichsweise hohe Austrittsgeschwindigkeit und eine vergleichsweise kleine Querschnittsfläche der Mündungsöffnungen der Brennstofflanzen gewählt werden, um einerseits möglichst schlanke Flammen zu erzeugen und andererseits zu verhindern, dass die Verbrennung zu nahe an den Wänden des Speiserkanals beginnt und die Speisewände dadurch zu stark thermisch belastet werden. Bevorzugt weist der der Strom des Brennstoffs beim Austritt aus der Brennstofflanze, also an der Mündungsöffnung der Brennstofflanze, dabei eine Reynoldszahl Re von Re < 10000, bevorzugt Re < 2300 auf. Neben dem Brennstoff sollte bevorzugt auch das Oxidationsmittel mit einem laminaren Strom in den Speiserkanal eingetragen werden, der ebenfalls eine Reynoldszahl von Re < 10000, bevorzugt Re < 2300 aufweist. Die Reynoldszahl sollte jedoch sowohl für den Brennstoff also auch das Oxidationsmittel nicht weniger als Re = 500 betragen, da ansonsten der dann vergleichsweise langsame Strom des austretenden Gases sowie die sich bildenden Flammen zur Speiserdecke aufsteigen, was zu einer Minderung der Verfahrenseffizienz und zu einer verstärkten thermischen Belastung des Wandmaterials führt.

Eine trichterförmige Erweiterung der Mündungsöffnungen der Brennstofflanzen ist unvorteilhaft; stattdessen sind erfindungsgemäß rohrzylinderförmige Brennstofflanzen bevorzugt oder solche, deren Strömungsquerschnitt sich zur Mündungsöffnung hin verjüngt. Eine besonders vorteilhafte Ausführungsform sieht Brennstofflanzen mit einer im Wesentlichen kreisförmigen oder ovalen Mündungsöffnung vor, deren Querschnittsfläche kleiner als 100 mm², bevorzugt zwischen 0,1 und 25 mm² beträgt. Derartige Brennstofflanzen eignen sich insbesondere auch zum Einbau in bestehende Anlagen, bei denen ein Speiserkanal bereits mit Öffnungen zum Einbau von Brennern ausgerüstet ist, die für die Zwecke der vorliegenden Erfindung jedoch mit Brennstoff- bzw. Oxidationsmittellanzen bestückt werden. Die Sauerstofflanzen weisen vorzugsweise eine Mündungsöffnung mit einer Querschnittsfläche von unter 200 mm², bevorzugt zwischen 0,2 und 50 mm² auf.

Vorteilhafterweise sind die Lanzen für Brennstoff und Oxidationsmittel in jeder Wand alternierend und gegeneinander versetzt angeordnet, sodass sich im Speiserkanal Brennstofflanzen und Oxidationsmittellanzen jeweils gegenüberstehen. Dadurch wird eine Überlappung der von beiden Seitenwänden in den Speiserkanal hineinragenden Flammen zumindest weitgehend vermieden. Zudem werden die Flammenspitzen jeweils intensiv mit Oxidationsmittel beaufschlagt, wodurch eine effiziente, vollständige Verbrennung des Brennstoffs begünstigt wird.

Als Oxidationsmittel kommt bevorzugt Luft, sauerstoffangereicherte Luft mit einem Sauerstoffanteil über 21 Vol.-% oder Sauerstoff mit einer bevorzugten Reinheit von über 90 Vol.-% und als Brennstoff bevorzugt ein gasförmiger oder flüssiger Brennstoff, beispielsweise Erdgas oder Wasserstoff zum Einsatz.

Eine für die Durchführung des erfindungsgemäßen Verfahrens geeignete Vorrichtung umfasst einen Speiserkanal mit einem Eingangsbereich und einem Ausgangsbereich, durch den im Einsatz der Vorrichtung eine Glasschmelze transportiert wird und dadurch eine Fließrichtung definiert. Die Beheizung des Speisekanals erfolgt durch die getrennte Zuführung von Brennstoff und Oxidationsmittel mittels Brennstoff- bzw. Oxidationsmittellanzen. Diese Lanzen sind in einer Seitenwand, beiden Seitenwänden und/oder der Decke des Speiserkanals in Fließrichtung der Glasschmelze voneinander beabstandet angeordnet. Zumindest die Brennstofflanzen, bevorzugt jedoch auch die Oxidationsmittellanzen, sind als zylindrische Rohre mit rundem, elliptischem oder ovalem Innenquerschnitt ausgebildet, wobei die Brennstofflanzen eine Querschnittsfläche von bevorzugt unter 100 mm², besonders bevorzugt zwischen 0,1 und 25 mm², und die Sauerstofflanzen eine Querschnittsfläche von bevorzugt von unter 200 mm², besonders bevorzugt zwischen 0,2 und 50 mm² aufweisen. Zudem sind die Brennstofflanzen und/oder die Sauerstofflanzen vorzugsweise mit einer Steuerung wirkverbunden, die eine Regelung von Mengenstrom und Geschwindigkeit des an jeder Brennstofflanze austretenden Brennstoffs bzw. des an jeder Oxidationsmittellanze austretenden Oxidationsmittels erlaubt und insbesondere die Ausbildung eines zumindest weitgehend laminaren, in das Innere des Speiserkanals eindringenden Brennstoffstrahls ermöglicht, der durch turbulente Strömungen in seinem Umgebungsbereich nicht oder nur geringfügig gestört wird.

Anhand der Zeichnungen soll ein Ausführungsbeispiel der Erfindung näher erläutert werden. In schematischen Ansichten zeigen:
- Fig. 1:: Eine Vorrichtung zur Durchführung des erfindungsgemäßen Verfahrens in einem Querschnitt senkrecht zur Fließrichtung der Glasschmelze,
- Fig. 2:: Die Vorrichtung aus Fig. 1 in einer Schnittansicht entlang der Ebene II-II in Fig. 1 und
- Fig. 3:: Eine Brennstofflanze der Vorrichtung aus Fig. 1 und 2 im Längsschnitt.

Bei der Vorrichtung 1 handelt es sich um einen hier nur ausschnittsweise dargestellten Feeder oder Speiser zum Transportieren und Beheizen einer Glasschmelze. Beispielsweise handelt es sich um das Segment eines Feeders, in dem geschmolzenes Glas mit einer Temperatur von beispielsweise 1100°C bis 1600°C von einem hier nicht dargestellten Schmelzofen zu einem hier gleichfalls nicht dargestellten Feederkopf geleitet wird, an welchem das im Schmelzofen geschmolzene Glas in Tropfen geschnitten und einer Weiterverarbeitung zugeführt wird.

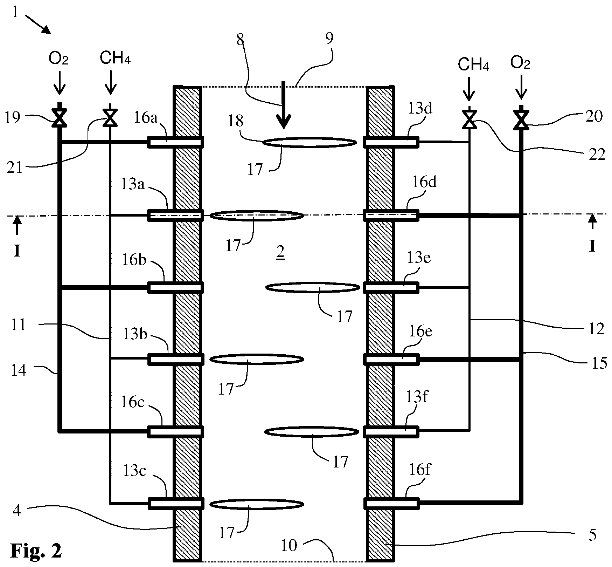

Das hier dargestellte Segment der Vorrichtung 1 umfasst einen Speiserkanal 2, der von einem Boden 3, Seitenwänden 4, 5 und einer Decke 6 aus einem feuerfesten Material eingefasst ist. Der Speiserkanal 2 dient zum Transport einer Glasschmelze 7, die durch den Speiserkanal 2 in Richtung des im Fig. 2 gezeigten Pfeils 8 von einem Eingangsbereich 9 zu einem Ausgangsbereich 10 des Speiserkanals 2 geführt wird.

Der Speiserkanal 2 wird durch Verbrennung eines Brennstoffs, beispielsweise Erdgas oder Wasserstoff, mit einem Oxidationsmittel, beispielsweise Luft oder Sauerstoff mit einer Reinheit von 90 Vol.-% oder mehr, beheizt. Der Brennstoff wird aus einer hier nicht gezeigten Quelle über Zuführleitungen 11, 12 zugeführt, die mit einer Mehrzahl von Brennstofflanzen 13a, 13b, 13c, 13d, 13e, 13f strömungsverbunden sind. Das Oxidationsmittel wird aus einer hier ebenfalls nicht gezeigten Quelle, beispielsweise einem Sauerstofftank, über Zuführleitungen 14, 15 zugeführt, die mit Oxidationsmittellanzen 16a, 16b, 16c, 16d, 16e, 16f strömungsverbunden sind. Die im Wesentlichen zylindrisch geformten Lanzen 13a, 13b, 13c, 13d, 13e, 13f; 16a, 16b, 16c, 16d, 16e, 16f münden im hier gezeigten Ausführungsbeispiel im Wesentlichen senkrecht zur Fließrichtung der Glasschmelze 7 (Pfeil 8) in den Speiserkanal 2 ein, können jedoch auch geneigt, insbesondere in Richtung auf die Schmelze und/oder in oder gegen die Fließrichtung 8 der Glasschmelze 7 geneigt angeordnet sein. Die Brennstofflanzen 13a, 13b, 13c, 13d, 13e, 13f und die Oxidationsmittellanzen 16a, 16b, 16c, 16d, 16e, 16f sind in jeder der Seitenwände 4, 5 alternierend angeordnet, d.h. in Fließrichtung der Glasschmelze 7 wechseln sich Brennstofflanzen 13a, 13b, 13c, 13d, 13e, 13f und Oxidationsmittellanzen 16a, 16b, 16c, 16d, 16e, 16f jeweils einander ab. Dabei sind die Brennstofflanzen 13a, 13b, 13c und die Oxidationsmittellanzen 16a, 16b, 16c in der Seitenwand 4 derart versetzt zu den Brennstofflanzen 13d, 13e, 13f und die Oxidationsmittellanzen 16d, 16e, 16f in der Seitenwand 5 angeordnet, dass jeweils eine Brennstofflanze 13a, 13b, 13c, 13d, 13e, 13f und eine Oxidationsmittellanze 16a, 16b, 16c, 16d, 16e, 16f gegenüberliegend in den Speiserkanal 2 ausmünden.

Im Betrieb der Vorrichtung 1 wird Brennstoff über die Brennstofflanzen 13a, 13b, 13c, 13d, 13e, 13f und Oxidationsmittel über die Oxidationsmittellanzen 16a, 16b, 16c, 16d, 16e, 16f in den Speiserkanal 2 im zueinander stöchiometrischen Verhältnis eingeleitet. Dabei wird darauf geachtet, dass zumindest der Brennstoffstrom an der Mündungsöffnung der Brennstofflanzen 13a, 13b, 13c, 13d, 13e, 13f als möglichst laminarer Freistrahl in den Speiserkanal 2 einströmt. Zur Erzeugung der laminaren Strömung wird der Brennstoff vorzugsweise mit einer Reynoldszahl von Re < 10000, bevorzugt zwischen Re = 500 und Re = 2300 in den Speiserkanal 2 eingetragen. Die laminare Strömung des Brennstoffs bewirkt, dass sich nur eine geringe Durchmischung mit dem aus den Oxidationsmittellanzen16a, 16b, 16c, 16d, 16e, 16f zugeführten Oxidationsmittel einstellt; eine nennenswerte Durchmischung erfolgt lediglich in einem Scherbereich um einen aus zumindest nahezu reinem Brennstoff bestehenden Freistrahl, der sich vor der Mündungsöffnung der Brennstofflanzen 13a, 13b, 13c, 13d, 13e, 13f ausbildet.

Um die Verbrennung in Gang zu setzen, wird beispielsweise die Atmosphäre im Innern des Speiserkanals 2 vor der Einleitung des Brennstoffs und/oder des Oxidationsmittels auf eine Temperatur gebracht, die über der Zündtemperatur des Gemisches aus Brennstoff und Oxidationsmittel liegt. Die weitgehend laminare Strömung des aus den Brennstofflanze 13a, 13b, 13c, 13d, 13e, 13f austretenden Brennstoffs führt zu einer Verbrennung nur innerhalb des genannten Scherbereichs. Es ergeben sich schlanke, stabile Flammen 17, die beabstandet vor den Mündungsöffnungen der Brennstofflanzen 13a, 13b, 13c, 13d, 13e, 13f beginnen, tief in das Innere des Speiserkanals 2 hineinragen und an einer - hier aus Gründen der Übersichtlichkeit nur an der Flamme 17 vor der Mündung der Brennstofflanze 13d gezeigten - Flammenspitze 18 enden, an der das Oxidationsmittel vollständig in den Brennstoffstrahl eingedrungen ist und in Folge eine vollständige Verbrennung des verbliebenen Brennstoffs erfolgt. Aufgrund ihrer langgestreckten, schmalen Form berühren sich benachbarte Flammen 17 nicht oder nur geringfügig.

Die Mengen und Strömungsgeschwindigkeiten der an den Lanzen (13a, 13b, 13c, 13d, 13e, 13f; 16a, 16b, 16c, 16d, 16e, 16f) austretenden Ströme von Brennstoff und Oxidationsmittel werden an Stellventilen 19, 20, 21, 22 mittels einer hier nicht gezeigte Steuereinheit in Abhängigkeit von gemessenen Parametern, wie beispielweise einer Temperatur im Speiserkanal 2 oder in der Glasschmelze 7 oder dem NOx-Gehalt in der Abgasleitung 24 laufend kontrolliert und geregelt. Insbesondere sollte die Regelung derart erfolgen, dass die Flammen 17 mit ihren Flammenspitzen 18 beabstandet von der jeweils gegenüberliegenden Seitenwand 5, 4 enden und ein bestimmter, vorgegebener Temperaturbereich im Speiserkanal 2 oder in der Glasschmelze 7 nicht über- oder unterschritten wird.

Anstelle oder ergänzend zur Anordnung der Brennstofflanzen 13a, 13b, 13c, 13d, 13e, 13f und der Oxidationsmittellanzen 16a, 16b, 16c, 16d, 16e, 16f in den Seitenwänden 4,5 können Lanzen für Brennstoff und Oxidationsmittel - ebenfalls in alternierender Reihenfolge - auch in der Decke 6 vorgesehen sein, wie durch die Lanze 23 angedeutet. Ebenso ist es im Rahmen der Erfindung vorstellbar, dass die Brennstofflanzen 13a, 13b, 13c, 13d, 13e, 13f und die Oxidationsmittellanzen 16a, 16b, 16c, 16d, 16e, 16f derart in den Seitenwänden 4, 5 und/oder der Decke 6 angeordnet sind, dass die von ihnen ausgehenden Stoffströme zumindest mit einer Richtungskomponente parallel oder entgegengesetzt zur Fließrichtung 8 der Glasschmelze 7 gerichtet sind.

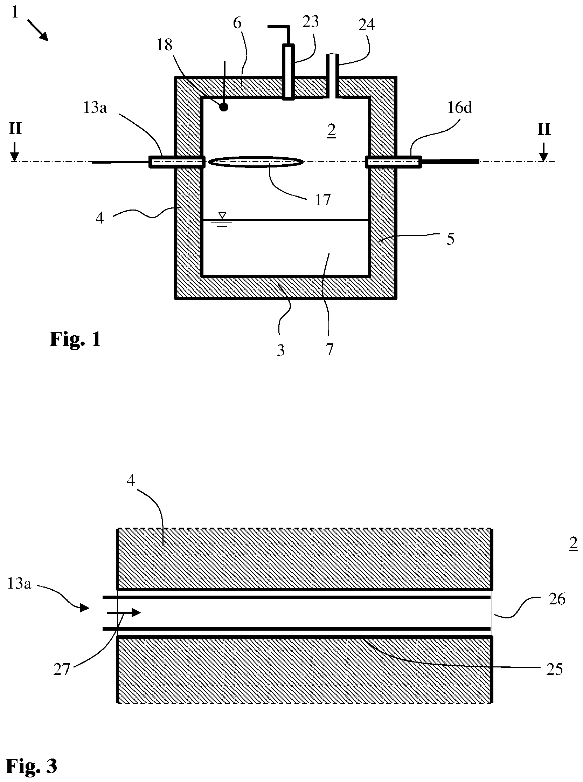

Der Aufbau des Vorderabschnitts einer Brennstofflanze 13a, 13b, 13c, 13d, 13e, 13f ist am Beispiel der Brennstofflanze 13a in Fig. 3 gezeigt. Die Brennstofflanze 13a ist als zylinderförmiges Rohr mit einem beispielsweise kreisförmigen Innenquerschnitt durch eine Durchführung 25 in der - hier nur abschnittsweise gezeigten - Seitenwand 4 hindurchgeführt und mündet stirnseitig mit einer Mündungsöffnung 26 aus, die ungefähr bündig mit der Innenwand der Seitenwand 4 abschließt. Der Brennstoff wird in Richtung des Pfeils 27 durch die Brennstofflanze 13a geführt. Der zylindrische Aufbau der Brennstofflanze 13a und ihr Innenquerschnitt von weniger als 100 mm² Fläche ermöglicht den Einbau auch in bestehende Speiserkanäle, die mit für klein bauende Brenner konzipierte Durchführungen 25 ausgerüstet sind. Die Oxidationsmittellanzen 16a, 16b, 16c, 16d, 16e, 16f können in ähnlicher Weise als zylindrische Rohre ausgebildet sein, wobei ihr Innenquerschnitt bevorzugt weniger als 200 mm² beträgt.

Die Vorrichtung 1 führt zu einer sehr gleichmäßigen Beheizung der Glasschmelze 7 im Speiserkanal 2 und zu sehr geringen NOₓ-Emissionen. Die Ausbildung einer turbulenten Flammenwolke in der Kanalmittel wird vermieden, wodurch die Effizienz des Verfahrens steigt. Gegenüber dem Einsatz von Brennern, wie beispielsweise Oxyfuel-Brennern, ergibt sich eine erhebliche Kostenersparnis hinsichtlich der eingebauten Hardware, zudem ist die thermische Belastung der Seitenwände 4, 5 und der Decke 6 des Speisekanals erheblich geringer.

Die Erfindung ist im Übrigen nicht auf die im Ausführungsbeispiel gezeigte Anordnung alternierend und/oder versetzt zueinander eingebauter Lanzen beschränkt, sondern umfasst auch andere Anordnungen von in Längsrichtung eines Speiserkanals beabstandet voneinander angeordneter Lanzen für Brennstoff und für Oxidationsmittel, mit denen die Ausbildung voneinander getrennter Flammen im Speiserkanal bewirkt werden kann.

### Bezugszeichenliste

- 1: Vorrichtung
- 2: Kanal
- 3: Boden
- 4: Seitenwand
- 5: Seitenwand
- 6: Decke
- 7: Glasschmelze
- 8: Pfeil
- 9: Eingangsbereich
- 10: Ausgangsbereich
- 11: Zuführleitung für Brennstoff
- 12: Zuführleitung für Brennstoff
- 13a-f: Brennstofflanze
- 14: Zuführleitung für Oxidationsmittel
- 15: Zuführleitung für Oxidationsmittel
- 16a-f: Oxidationsmittellanze
- 17: Flamme
- 18: Flammenspitze
- 19: Stellventil
- 20: Stellventil
- 21: Stellventil
- 22: Stellventil
- 23: Lanze
- 24: Abgasleitung
- 25: Durchführung
- 26: Mündungsöffnung (der Brennstofflanze)
- 27: Pfeil

## Patentansprüche

1. Verfahren zum Beheizen einer fließenden Glasschmelze in einem von Seitenwänden (4, 5) und einer Decke (6) eingefassten Speiserkanal (2), in den oberhalb der Glasschmelze (7) eine Mehrzahl von in Fließrichtung der Glasschmelze (7) beabstandet voneinander angeordneten Brennstofflanzen (13a, 13b, 13c, 13d, 13e, 13f) und Oxidationsmittellanzen (16a, 16b, 16c, 16d, 16e, 16f) einmünden, durch die Brennstoff bzw. Oxidationsmittel zugeführt und im Speiserkanal (2) miteinander zur Reaktion gebracht werden,
**dadurch gekennzeichnet,**
**dass** zum Verbrennen des Brennstoffs mit dem Oxidationsmittel an jeder Brennstofflanze (13a, 13b, 13c, 13d, 13e, 13f) ein im Wesentlichen laminar in den Speiserkanal (2) tretender Brennstoffstoffstrahl erzeugt und mit im Speiserkanal (2) anwesendem Oxidationsmittel jeweils unter Ausbildung einer Flamme (17) zur Reaktion gebracht wird.

2. Verfahren nach Anspruch 1, **dadurch gekennzeichnet, dass** zur Erzeugung der Flamme (17) der Strom des Brennstoffs und/oder des Oxidationsmittels beim Austritt aus der Brennstofflanze (13a, 13b, 13c, 13d, 13e, 13f) eine Reynoldszahl Re von Re < 10000, bevorzugt Re < 2300 aufweist.

3. Verfahren nach Anspruch 1 oder 2, **dadurch gekennzeichnet, dass** zur Erzeugung der Flamme (17) der Strom des Brennstoffs und/oder des Oxidationsmittels beim Austritt aus der Brennstofflanze (13a, 13b, 13c, 13d, 13e, 13f) eine Reynoldszahl Re von Re > 500 aufweist.

4. Verfahren nach einem der vorhergehenden Ansprüche, **dadurch gekennzeichnet, dass** die Brennstofflanzen (13a, 13b, 13c, 13d, 13e, 13f) eine im Wesentlichen kreisförmige, elliptische oder ovale Mündungsöffnung (26) aufweisen, deren Querschnittsfläche weniger als 100 mm², bevorzugt zwischen 0,1 und 25 mm² beträgt.

5. Verfahren nach einem der vorhergehenden Ansprüche, **dadurch gekennzeichnet, dass** die Oxidationsmittellanzen (16a, 16b, 16c, 16d, 16e, 16f) eine im Wesentlichen kreisförmige oder ovale Mündungsöffnung aufweisen, deren Querschnittsfläche weniger als 200 mm², bevorzugt zwischen 0,2 und 50 mm² beträgt.

6. Verfahren nach einem der vorhergehenden Ansprüche, **dadurch gekennzeichnet, dass** Brennstofflanzen (13a, 13b, 13c, 13d, 13e, 13f) und Oxidationsmittellanzen (16a, 16b, 16c, 16d, 16e, 16f) in jeder Seitenwand (4, 5) des Speiserkanals (2) in einer Reihe alternierend zueinander und die Reihen in beiden Seitenwänden (4, 5) versetzt gegeneinander angeordnet sind.

7. Verfahren nach einem der vorhergehenden Ansprüche, **dadurch gekennzeichnet, dass** als Oxidationsmittel Luft, sauerstoffangereicherte Luft oder Sauerstoff zum Einsatz kommt.

## Claims

1. Method for heating a flowing glass melt in a feeder channel (2) encased by side walls (4, 5) and a ceiling (6), where a plurality of fuel lances (13a, 13b, 13c, 13d, 13e, 13f), arranged with spacing from one another in the flow direction of the glass melt (7), and oxidant lances (16a, 16b, 16c, 16d, 16e, 16f) open into said channel above the glass melt (7), where fuel and oxidant, respectively, are supplied through said lances and reacted with one another in the feeder channel (2),
**characterized**
**in that** for the combustion of the fuel with the oxidant, at each fuel lance (13a, 13b, 13c, 13d, 13e, 13f) a fuel material jet is generated which enters the feeder channel (2) substantially laminarly and is reacted with oxidant present in the feeder channel (2) to form respectively a flame (17).

2. Method according to Claim 1, **characterized in that** for the generation of the flame (17), the flow of the fuel and/or of the oxidant on emergence from the fuel lance (13a, 13b, 13c, 13d, 13e, 13f) has a Reynolds number Re of Re < 10000, preferably Re < 2300.

3. Method according to Claim 1 or 2, **characterized in that** for the generation of the flame (17), the flow of the fuel and/or of the oxidant on emergence from the fuel lance (13a, 13b, 13c, 13d, 13e, 13f) has a Reynolds number Re of Re > 500.

4. Method according to any of the preceding claims, **characterized in that** the fuel lances (13a, 13b, 13c, 13d, 13e, 13f) have a substantially circular, elliptical or oval opening aperture (26) whose cross-sectional area is less than 100 mm², preferably between 0.1 and 25 mm².

5. Method according to any of the preceding claims, **characterized in that** the oxidant lances (16a, 16b, 16c, 16d, 16e, 16f) have a substantially circular or oval opening aperture whose cross-sectional area is less than 200 mm², preferably between 0.2 and 50 mm².

6. Method according to any of the preceding claims, **characterized in that** fuel lances (13a, 13b, 13c, 13d, 13e, 13f) and oxidant lances (16a, 16b, 16c, 16d, 16e, 16f) are arranged in each side wall (4, 5) of the feeder channel (2) in a row in alternation with one another and the rows in both side walls (4, 5) are arranged with offsetting from one another.

7. Method according to any of the preceding claims, **characterized in that** the oxidant employed comprises air, oxygen-enriched air or oxygen.

## Revendications

1. Procédé de chauffage d'un verre en fusion en écoulement dans un canal d'alimentation (2) qui est entouré de parois latérales (4, 5) et d'un plafond (6) et dans lequel une pluralité de lances de carburant (13a, 13b, 13c, 13d, 13e, 13f) et de lances d'agent d'oxydation (16a, 16b, 16c, 16d, 16e, 16f), qui sont disposées à distance les unes des autres dans la direction d'écoulement du verre en fusion et qui amènent le carburant ou l'agent d'oxydation et les font réagir dans le canal d'alimentation (2), débouchent au-dessus du verre en fusion,
**caractérisé en ce que**
pour brûler le carburant avec l'agent d'oxydation, un jet de carburant qui pénètre dans le canal d'alimentation (2) de manière sensiblement laminaire est généré au niveau de chaque lance de carburant (13a, 13b, 13c, 13d, 13e, 13f) et est amené à réagir avec l'agent d'oxydation présent dans le canal d'alimentation (2) en formant à chaque fois une flamme (17).

2. Procédé selon la revendication 1, **caractérisé en ce que**, pour générer la flamme (17), le flux de carburant et/ou d'agent d'oxydation présente en sortie de lance de carburant (13a, 13b, 13c, 13d, 13e, 13f) une Nombre de Reynolds Re tel que Re < 10000, de préférence Re < 2300.

3. Procédé selon la revendication 1 ou 2, **caractérisé en ce que**, pour générer la flamme (17), le flux de carburant et/ou d'agent d'oxydation présente en sortie de lance de carburant (13a, 13b, 13c, 13d, 13e, 13f) un nombre de Reynolds Re tel que Re > 500.

4. Procédé selon l'une des revendications précédentes, **caractérisé en ce que** les lances de carburant (13a, 13b, 13c, 13d, 13e, 13f) comportent une ouverture d'embouchure (26) sensiblement circulaire, elliptique ou ovale, avec une section transversale inférieure à 100 mm², de préférence comprise entre 0,1 et 25 mm².

5. Procédé selon l'une des revendications précédentes, **caractérisé en ce que** les lances d'agent d'oxydation (16a, 16b, 16c, 16d, 16e, 16f) comportent une ouverture d'embouchure sensiblement circulaire ou ovale, avec une section transversale inférieure à 200 mm², de préférence comprise entre 0,2 et 50 mm².

6. Procédé selon l'une des revendications précédentes, **caractérisé en ce que** des lances de carburant (13a, 13b, 13c, 13d, 13e, 13f) et des lances d'agent d'oxydation (16a, 16b, 16c, 16d, 16e, 16f) sont disposées dans chaque paroi latérale (4, 5) du canal d'alimentation (2) en rangée de manière alternée et les rangées sont disposées dans les deux parois latérales (4, 5) de manière décalée les unes par rapport aux autres.

7. Procédé selon l'une des revendications précédentes, **caractérisé en ce que** de l'air enrichi en oxygène ou de l'oxygène sont utilisés comme agent d'oxydation.
